# EUROPÄISCHE PATENTSCHRIFT

(11) **EP 2 138 352 B1**
(45) Veröffentlichungstag und Bekanntmachung des Hinweises auf die Patenterteilung: **07.04.2010**
(21) Anmeldenummer: 08158859.2
(22) Anmeldetag: 24.06.2008
(51) Int. Cl.: B60R 1/06, B60S 1/02, B60S 1/08, G02B 27/00, G06T 7/00, H05B 3/84

(54) **Optisches System und Verfahren zur Erkennung von optischer Verschleierung in einem Fahrzeug**
Optical system and method for recognising optical veiling in a vehicle
Système optique et procédé de reconnaissance de voilage optique dans un véhicule

(43) Veröffentlichungstag der Anmeldung: 30.12.2009
(73) Patentinhaber: SMR Patents S.à.r.l., 1653 Luxembourg (LU)
(72) Erfinder: Linsenmaier, Frank, 71384 Weinstadt (DE); Wagner, Daniel, 71384 Weinstadt (DE); Eder, Oliver, 75446 Pinache (DE); Steffel, Hans-Clemens, 73027 Stuttgart (DE)
(74) Vertreter: Rausch, Gabriele

(56) Entgegenhaltungen:
- EP-A- 1 418 089
- DE-U1-202005 018 498
- DE-U1-202007 007 112

## Beschreibung

Die Erfindung bezieht sich auf ein optisches System mit der Möglichkeit einen Verschleierung der Optik zu erkennen, und gegebenenfalls Maßnahmen einzuleiten, die entweder den Fahrer warnen und / oder die Aktivierung einer Heizung, die die entdeckte Verschleierung des Bildes vermindert.

### Stand der Technik

Zum Einsatz in einem Fahrerassistenzsystem werden kontinuierlich neue Assistenzfunktionen entwickelt. Eine dieser neuen Assistenzfunktionen, die den Fahrer bei einem Spurwechsel unterstützen soll, wird als LCA bezeichnet (LCA = Lane Change Assistant). Auch bei dieser Assistenzfunktion wird das Umfeld des Fahrzeugs, insbesondere dessen rückwärtiger und seitlicher Bereich, wiederum mit einem geeigneten Umfeldsensor überwacht. Als Umfeldsensoren können wiederum Sensoren auf Basis von Radar, Lidar oder auch Bildsensoren eingesetzt werden. Diese Assistenzfunktion warnt den Fahrer bei gefährlichen Überhol- und Spurwechselvorgängen. Eine kritische Situation wird dem Fahrer beispielsweise durch eine akustische, optische oder haptische Warnung, beziehungsweise durch eine Kombination derartiger Warnungen, angezeigt. Ein beabsichtigter Spurwechsel des eigenen Fahrzeugs wird von dem Fahrerassistenzsystem in der Regel dadurch erkannt, dass der Fahrer bei dem Einleiten des Spurwechsels den Blinker setzt. Auch bei einem sorgfältig geplanten und applizierten Fahrerassistenzsystem kann ein Fehlverhalten nicht völlig ausgeschlossen werden, das sich in Fehlwarnungen oder auch ausgebliebenen Warnungen äußert. Eine häufige Ursache für ein derartiges Fehlverhalten ist eine fehlerhafte Zuordnung der in dem Verkehrsraum in dem Umfeld des Fahrzeugs detektierten Objekte. Diese Fehlfunktion kann mehrere Ursachen haben. Weitere Assistenzfunktionen unterstützen den Fahrer bei Einparkvorgängen und beim Rücksetzen des Fahrzeugs. Auch bei diesen Assistenzfunktionen stützt sich das Fahrerassistenzsystem auf Sensorsignale von insbesondere optischen Sensoren und Ultraschallsensoren. Eine weitere Funktion der so genannte "Bird-View" erlaubt einen Rundumsicht um das Fahrzeug mithilfe von optischen Sensoren. Die Integration von unterschiedlichen Sensoren zu neuen Funktionen und eine Verbesserung der Information an den Fahrer nimmt immer weiter zu.

Grundvoraussetzung für den fehlerlosen Einsatz der optischen Sensoren, die zu Bilderfassung dienen, ist, dass die den Umweltbedingungen ausgesetzte Optik eine zuverlässige Abbildung der Umgebung gewährleistet. Gerade in den automobilen Anwendungen sind die Sensoren den normalen Umweltbedingungen ausgesetzt. Die Montagesituation beispielsweise eines Totwinkel- Überwachungssystems am Außenspiegel kann nicht verhindern, dass Objekte das Kameraobjektiv verdecken. Durch die Luftströmungen und chaotischen Verwirbelungen um das Fahrzeug, setzen sich Schmutzpartikel auf der Optik ab. Spritzwasser und Regen führen zur Tropfenbildung auf dem Objektiv. Temperaturwechsel und unterschiedliche Luftfeuchtigkeit ist die Ursache für eine Beschlagsbildung. In kalten Zonen kann sich sich zudem Eis auf den Objektiven.bilden
Die Ursache der optischen Streuung sind Beschläge, die meist aus Wasser, beispielsweise Tau und Reif, oder aus Schmutz bestehen. Schmutz setzt sich aus anderen Materialien wie Ölen, Fetten, oder nichttransparenten Feststoffen, die auch im Wasser gelöst sein können, zusammen.

Aufgabe der vorliegenden Erfindung ist es, diese Verdeckungs- und Verschleierungszustände festzustellen, zu identifizieren und Maßnahmen einzuleiten um entweder den Fahrer zu warnen und/oder durch eine Heizung die Verschleierung zumindest teilweise zu entfernen.

Aus dem Stand der Technik, wie aus der EP 1 901 116 A2 sind unterschiedliche Verfahren zur Schmutz- und Tropfenerkennung bekannt. Hierbei werden Sender- Empfängersystem in der Optik zur Detektion verwendet.

Ebenfalls aus dem Stand der Technik sind Kamerasensoren mit heizbarerer Abdeckscheibe bekannt. Die WO2005/033772 beschreibt einen Kamerasensor, dessen Abdeckscheibe mit einer Widerstandsheizung beheizbar ist.

### Figurenbeschreibung

Figur 1 zeigt einen beispielhaften Montageort für einen Sensor zur Bilderkennung,
Figur 2 zeigt einen beispielhaften Sensorenaufbau
Figur 3 zeigt einen beispielen Verfahrenverlauf
Figur 4 zeigt einen Verfahrensverlauf zur Detektion der Verschleierung
Figur 5 zeigt einen beispielhaften Sensor mit Heizung
Figur 6 und 7 sind zwei Ausführungsformen der Heizung.

Das erfindungsgemäße Verfahren zur Erkennung der optischen Verschleierung des Sensors macht von mindestens zwei Sensoren Gebrauch. Dadurch wird die Redundanz einer Aussage über das Maß der Verschleierung und über die Qualität der Verschleierung erhöht. Gerade für die automobilen Sicherheitssysteme ist diese Erhöhung der Sicherheit in der Bilderkennung wichtig. Der Einsatz desselben Sensors zur Bilderkennung als auf für die Erkennung der Verschleierung reduziert die Anzahl der notwenigen Bauteile und kann daher die Größe des Bauteils und die Kosten gering halten.

Die weiteren Vorteile sind in den abhängigen Ansprüchen ausgeführt. Vorteilhafterweise wird die Verschleierung aus dem eigentlichen Bild durch einen Algorithmus erkannt, der die Grauwertverteilung im Bild ermittelt. Dadurch ist kein zusätzlicher Sensor notwenig.
Ein weiterer Vorteil ergibt sich dadurch, dass durch Vergleich der Bilder mehrerer Sensoren einen komplette Abdeckung eines Sensors sehr einfach festgestellt werden kann.

### Beschreibung der Ausführungsformen

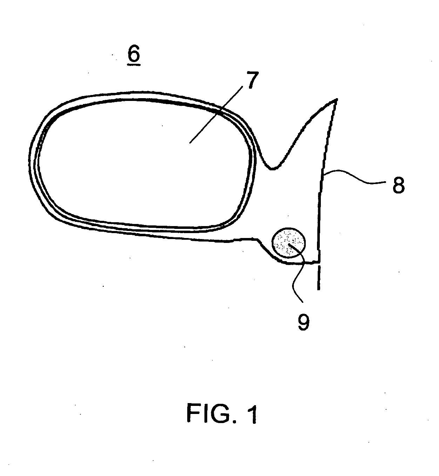

Figur 1 zeigt einen beispielhaften Fahrzeugaußenspiegel 6, Die Rückspiegelanordnung besteht aus einem Spiegelkopf und einem Spiegelfuß. Der Spiegel selbst ist im Spiegelkopf angeordnet. Der Spiegelfuß ist bündig mit der Fahrzeugkontur 8 verbunden. Ein optischer Sensor 9 ist an in der Rückspiegelanordnung angebracht, in dieser Ausführungsform im oder am Spiegelfuß. Als optischer Sensor dient jede Art von Sensor, der zur Bilderfassung dienen kann.
Der Sensor ist in einer nicht dargestellte Ausführungsform im oder am Spiegelkopf installiert.

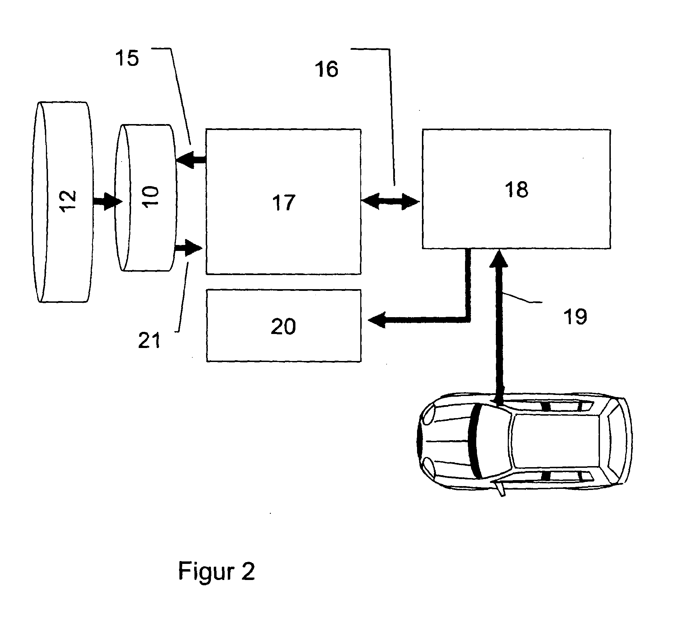

Figur 2 zeigt schematisch den Aufbau des optischen Sensorsystems. Eine optische Linse 12 ist einem Sensorchip 10 vorgeschaltet. Dieser optische Chip ist mit einer Bilddatenverbindung 21 mit einem Bildprozessor 17 verbunden. Dieser steht bidirektional mit einem Kommunikationskontroller in Verbindung. Dieser Kommunikationskontroller 18 stellt über den Fahrzeugbus, zum Beispiel einem LIN Bus , CAN-Bus oder Flexiray oder über einen spezielle Kommunikationsleitung LVDS ( **L**ow **V**oltage **D**ifferential **S**ignaling) die Verbindung zu weiteren Kontrollern im Fahrzeug her. Über den Kommunikationskontroller wird die Ausgabeeinheit 20 angesprochen, entweder direkt wie im Beispiel ausgeführt oder über das Fahrzeugbussystem. Der Bildprozessor wiederum greift über die Sensorkontroll-Verbindung auf den Sensor Chip zu. Die Ausgabeeinheit 20 kann ein einfache Leuchtdiode sein, die die Beeinträchtigung der Optik anzeigt, oder ein Warnhinweis in einem Display. Die Position und Art der Anzeige ist auf verschiedene Arten realisierbar, die ein Fachmann für einen solche Anzeige vorsehen würde.

Das in Figur 2 skizzierte System wird auf beiden Seiten des Fahrzeugs in den Rückblickspiegeln verwendet. Allerdings lässt das Prinzip für jeden optischen Sensor realisieren unabhängig von seiner Position am Fahrzeug.

Bei optisch basierten Sensorsystemen werden grundsätzlich Informationen außerhalb des Sensorsystems erfasst und der Signal-Rausch-Abstand des erfassten Signals wird mittels Software bewertet. Es wird das erfasste Bild aus einer 3-dimensionalen Welt auf eine 2-dimensionale Bildebene projiziert. Bei dieser Methode kann nicht unterschieden werden, ob die erfassten Grauwertverläufe und eine mögliche Kontrastarmut tatsächlich aus dem erfassten Bild entstanden sind, oder, ob dies durch eine Schmutzschicht auf dem Objektiv hervorgerufen werden. Die Ursache der Kontrastarmut in einem Bild ist nicht eindeutig detektierbar. Mit einem passiven Kamerasystem kann ein solcher Zustand nicht eindeutig detektiert werden, was als systeminhärentes Problem gilt.

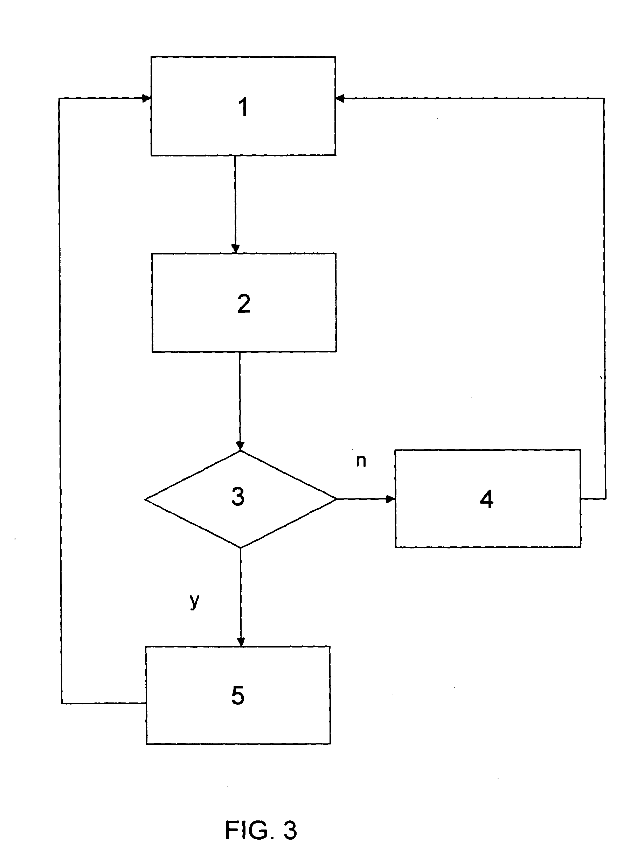

Die Problematik wird mit einem Verfahren nach Figur 3 angegangen. Im ersten Schritt des Verfahrens wird ein Bild erfasst. Schritt 2 ist die Bilderkennung. Schritt 3 erfasst die Tatsache, dass eine Verschleierung oder Störung vorliegt. Bei einer positiven Entscheidung über eine Verschleierung wird Schritt 4 eingeleitet, was entweder eine Anzeige der Fehlfunktion bedeutet und/oder das Einschalten einer Heizung. Der Prozess wird dann wieder vom Schritt 1 gestartet. Ist die Entscheidung der Störungserfassung 3 negativ wird die Anzeige und/oder die Heizungsfunktion wieder beendet und der Prozess läuft wieder vom Schritt 1 an ab.

Der kritische Punkt in diesem Verfahren stellt die Störungserkennung 3 dar. Ein Basisalgorithmus im Bildprozessor bewertet den Kontrastverlauf innerhalb des Kamerabildes und ermittelt den Gradienten, um ein Maß für die Änderung des Kontrasts zu ermitteln. Der einfachste Fall stellt eine flächig begrenzte Verschmutzung dar. Um diesen Verdeckungszustand detektieren zu können, suchen Algorithmen innerhalb des Bildes nach Gradienten mit stufenförmigem Verlauf der Grauwertverteilung. Befindet sich im Bild eine "plötzliche" Stufe und ein Übergang einer stochastischen Grauwertverteilung zu einem großflächigen Grauwertfeld mit homogenem zusammenhängendem Grauwertanteil, kann darauf geschlossen werden, dass sich eine Verschmutzung auf dem Objektiv befindet.

In diesem Fall einer Verschleierung des Bildes kann einen Entscheidung aufgrund der Auswertung nur eines Bildsensors erfolgen, allerdings gibt auch in diesem Fall der Vergleich mit einem zweiten Bild einer zweiten Bildsensors höhere Sicherheit bei der Entscheidung. Bei der partiellen Verdeckung wird ein "Blocked-Camera-Algorithmus" eingesetzt, der die Bilddaten des weiteren Kamerasensors als blockiert detektiert und den Fahrere über die Blockierung informiert. Der Gradient der Grauwerte im Bild wird ermittelt. Dieser Zustand kann nahezu ohne "externe Hilfe" aus der zur Verfügung stehenden Bildinformation berechnet werden.

Um die Erkennungswahrscheinlichkeit einer halbtransparenten Verschmutzung zu erhöhen, wird eine Methode der Inter-Kamera-Kommunikation eingeführt, die es ermöglicht, zumindest grobe Helligkeitsinformationen aus einem weiteren, sich am Fahrzeug befindenden, Kamerasystem zu bewerten. Die Kamerasysteme tauschen Informationen über den Betriebsmodus Tag-/Nacht-Modus durch Messung der Helligkeit aus. Die Information des jeweils anderen Kamerasystems wird bei der Bewertung hinzugezogen. Durch die zusätzliche Referenz ist eine zuverlässigere Aussage möglich. Es lassen sich aus diesen zusätzlich verfügbaren Informationen weitere Verdeckungs- und Verschleierungszustände ableiten.

Einen weiteren Spezialfall stellt einen totale Verschleierung dar. Bei der totalen Verdeckung wird die externe Hilfe des weiteren Kamerasystems für die Bewertung hinzu gezogen.

Bei der halbtransparenten Verdeckung handele es ich um die komplexeste Form der Verschmutzung, die erkannt werden muss. Das ist der Fall, wenn sich die Optik des Sensorsystems beschlagen hat oder eine Reifschicht auf der Linse lagert. Um diesen Zustand sicher erkennen zu können, nutzt das Kamerasystem die Information der anderen Kamera um zusätzlich über deren Betriebszustand einen Aufschluss über die Ursache der Kontrastarmut zu ermitteln.

Da sich solche Zustände schleichend verändern, wird eine Zeitfunktion hinzugezogen. Bleibt die Kontrastarmut über ein Messintervall bestehen, wird ein interner Zähler (Blocked-Camera-Counter) erhöht. Wenn dieser eine definierte Schwelle überschreitet und die andere Kamera als Zusatzfunktion ebenfalls eine Blockierung anzeigt, wird das Anzeigesystem ausgelöst.

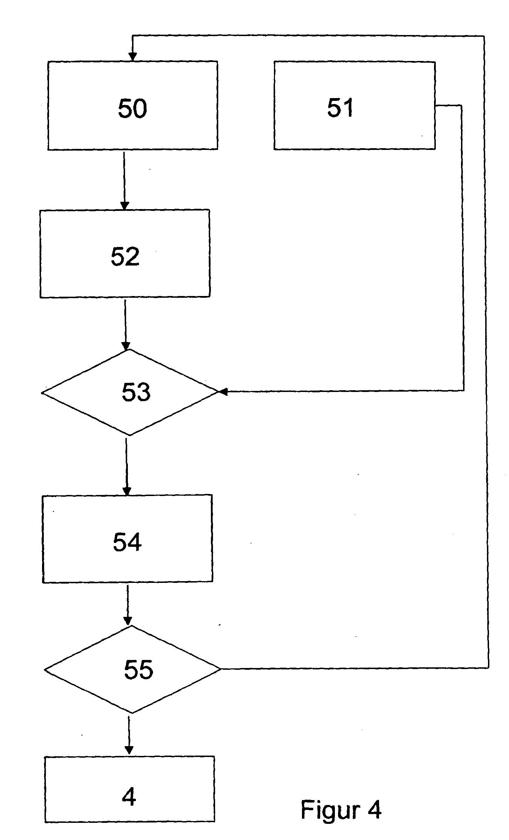

Figur 4 zeigt einen Verfahrensverlauf für die Feststellung einer Verschleierung. Das gesamte Verfahren entspricht dem Schritt 3 aus Figur 2.

Alls Grundlage dient eine erste Bilderkennung 50 und einen zweite Bilderkennung 51. Verfahrensschritt 52 stellt die Grauwerterfassung dar, die als erstes ein Maß der Helligkeit liefert , um so Tag oder Nacht zu bestimmen. Die Grauwerterfassung 52 ist mit dem nächsten Schritt dem Grauwertvergleich 53 verbunden. In diesem Schritt wird entschieden ob die Werte der zweiten Bilderfassung hinzugezogen werden muss. Ist die Verschleierung vorhanden, wird die Information des weiteren Sensors herangezogen. Im nächsten Schritt wird der Zähler 54 angesteuert und um einen Wert hoch gesetzt. Die Bildauswertung beginnt erneut. Solange die Verschleierung bleibt oder zunimmt wird das Inkrement des Zählers bis zu einem Schwellwert hoch gezählt. Mit Erreichen des Schwellwerts in Schritt 55 wird die Warnfunktion der Anzeige angesteuert. Alternativ oder auch gleichzeitig wird eine Heizung aktiviert Der Zähler 54 wird mit der Aktivierung der Maßnahmen nicht auf Null zurückgesetzt sondern zurückgezählt, damit die Maßnahme im zeitlichen verlauf wirken kann. Der Zähler 54 wird bis zu einer zweiten Schwellen zurückgezählt.

Um die witterungsbedingten Effekte auf ein Minimum reduziert werden, sind die Lichtaus- bzw. Lichteintrittsfenster optischer Sensoren mit einer Heizung versehen. Beschläge, die aus reinem Wasser ohne vermischte Schmutzpartikel bestehen werden am einfachsten entfernt, indem das Wasser unter Einfluss von Wärme verdunstet oder sublimiert wird.

Am häufigsten treten Beschläge am exponiertesten Element auf, das die Schnittstelle des optischen Systems zur Umgebung darstellt. In vielen Fällen handelt es sich dabei um die Lichtscheibe oder die äußerste Linse. Dort herrschen die größten Temperaturunterschiede.

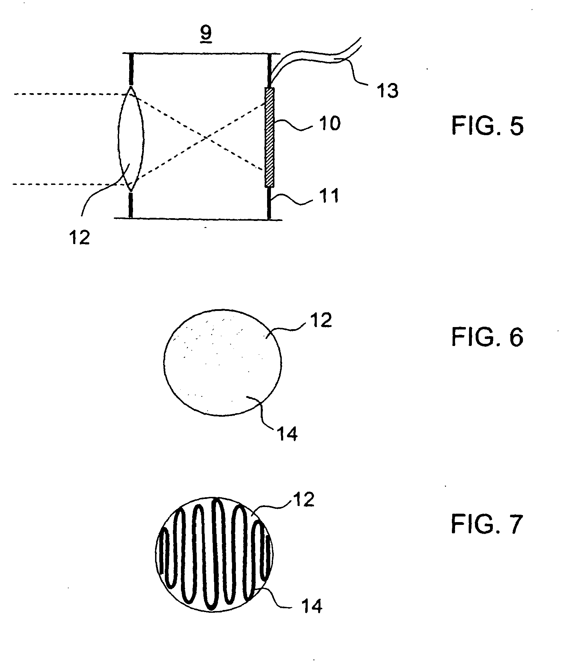

Figur 5 zeigt schematisch einen optischen Sensor 9 mit einer optischen Linse 12 und einem Sensor Chip 10. Der Sensor Chip sitzt auf einer Platine 11 und ist über elektrische Verbindungen 13 mit dem Fahrzeug verbunden.

Damit das optische Element beheizt werden kann, ist es vorteilhaft, dessen gesamte Fläche mit einem Heizwiderstand zu versehen. Die optische Funktion dieses Elements wird nicht beeinträchtigt, wenn dieser Heizwiderstand für den Wellenlängenbereich des Lichts transparent ausgeführt ist, in dem der ungehinderte Lichtdurchtritt für die jeweilige Anwendung notwendig ist. Für den sichtbaren Wellenlängenbereich und nahes Infrarot kann z.B. mit einer ITO (Indium Tin Oxide, Zinn dotiertes Indiumoxid), Zinnoxid (SnO), Aluminium dotierter Zinkoxid (ZnO:Al) oder Fluor dotierter Zinnoxid (FTO, Fluor Tin Oxide) Beschichtung geheizt werden. Diese beispielhafte Anordnung ist in Figur 6 beschrieben. Die optische Linse 12 weist eine flächige Heizschicht 14 auf.
Der Heizwiderstand wird als flächiges Element auf der gesamten für die Funktion des optischen Elements notwendigen Fläche in Form einer Beschichtung aufgebracht. Damit der Heizwiderstand auf der Oberfläche des optischen Elements, auf welchem er aufgebracht ist, gut haftet, kann vorher eine Primer- oder Haftvermittlungsschicht aufgebracht werden. Diese kann im Fall von Glas als Material des optischen Elements beispielsweise aus Siliziumdioxid (SiO₂) bestehen.
Die Einspeisung der elektrischen Energie in den Heizwiderstand kann mittels einer Leiterbahn geschehen, die, auf dieselbe Weise wie Heizleitungen an Fahrzeugscheibenheizungen, auf dem zu beheizenden optischen Element aufgebracht wird. In Figur 7 wird einen Ausführungsform gezeigt, die Heizwindungen auf dem optischen Element zeigen. Diese Heizmäander stören die Bildauswertung nicht, da ihre eventuell vorhandenen Abschattung durch die Software kompensiert wird.
Der Heizwiderstand kann sowohl innen als auch außen auf das äußerste optische Element aufgebracht werden. Die Kontaktierung kann mittels eines Federkontakts oder einer Federkontaktleiste aus Metall bestehen. Eine weitere Möglichkeit besteht in der Kontaktierung mittels leitfähiger verformbarer Kunststoffe.
Die Kontaktierung kann mittels angelöteter Kontakte, wie z. B. Lötfahnen oder angelöteter Zuleitungen, geschehen.
Damit Kontaktierungselemente aufgelötet werden können, sind vorher geeignete Metallschichten wie, z.B. Kupfer (Cu), auf der Oberfläche des Heizwiderstandes aufgebracht.

Ist der Heizwiderstand auf der Außenseite des äußersten optischen Elements angebracht, kann die Zuleitung von innen derart geschehen, dass die notwendigen Haftungs-, Passivierungs- und Schutzschichten um den Rand des optischen Elements von der der äußeren Umgebung abgewandten Seite (innere Seite) auf die äußere Seite geführt werden.

Die Kontaktierung kann mittels einer Leiterbahn von der Innenseite nach außen geführt werden. Damit diese geschützt ist, wird der eigentliche Heizwiderstand im Bereich von Dichtungs- bzw. Einfassungselementen des beheizbaren optischen Elements kontaktiert.

Wird der Heizwiderstand auf der Außenseite des äußersten optischen Elements aufgebracht, kann, je nach verwendetem Material, zur Vermeidung von Korrosion, eine Passivierungsschicht aufgebracht werden. Diese kann z.B. aus Siliziumdioxid (SiO₂) oder Siliziumnitrid (Si₃N₄) bestehen.

Sowohl die Passivierungsschichten als auch die Heizwiderstandsschicht können Teil einer Entspiegelungsbeschichtung sein. Eine Entspiegelungsschicht kann auch zusätzlich auf die Heizleiterschicht aufgebracht werden, wenn die Schichtstärke des Heizwiderstandes eine Verwendung dessen als Bestandteil einer Entspiegelungsschicht nicht verbietet. Die Entspiegelungsschicht kann z.B. aus Titandioxid (TiO₂), Siliziumdioxid (SiO₂) oder Siliziumnitrid (Si₃N₄) bestehen.

Als eine weitere mögliche Schutzschicht kann eine Beschichtung zur Erhöhung der Kratzfestigkeit aufgebracht werden. Dies ist angebracht, wenn die Heizung an der Außenseite einer Kunststofflichtscheibe aufgebracht ist.

Da die verwendeten Materialien für die Haftvermittlungsschicht, die Heizschicht und die Entspiegelungsschicht(en) bereits für sich relativ hart sind, stellen diese gleichzeitig eine Kratzfestschicht dar.

Zur Verringerung von Beschlag ist in einer Ausführungsform auf dem optischen Element auf seiner äußersten Seite eine hydrophile Beschichtung aufgebracht. Diese bewirkt, dass nicht einzelne Tropfen, sondern ein gleichmäßig verteilter Feuchtigkeitsfilm auf der Oberfläche liegt. Dieser Film verhindert, dass im Wasser gelöster oder mit Wasser vermengter Schmutz auf der Oberfläche austrocknet, sondern der Schwerkraft folgend mit dem Wasser in den Randbereich abläuft und mit dem ablaufenden Wasser entfernt wird
Zur Verringerung von Beschlag ist auf dem optischen Element auf seiner äußersten Seite eine hydrophobe Beschichtung aufgebracht. Diese bewirkt, dass einzelne Tropfen, die auf der Oberfläche liegen eine sehr kleine Kontaktfläche zu dieser besitzen. Dieser Film verhindert, dass im Wasser gelöster oder mit Wasser vermengter Schmutz auf der Oberfläche austrocknet, sondern der Schwerkraft folgend in den Randbereich abläuft und mit dem ablaufenden Wasser entfernt wird.

### Legende

- 1: Bilderfassung
- 2: Bilderkennung
- 3: Störungserfassung
- 4: Start Information/Heizung
- 5: Stop Information/Heizung
- 6: Rückspiegelanornung
- 7: Spiegel
- 8: Fahrzeugkontour
- 9: Optischer Sensor
- 10: Sensor Chip
- 11: Platine
- 12: Optische Linse
- 13: Verbindung
- 14: Heizung
- 15: Sensorkontrolle
- 16: Bidirektionale Verbindung
- 17: Bildprozessor
- 18: Kommunikationskontroller
- 19: Bussystem
- 20: Ausgabeeinheit
- 21: Bilddaten

- 50: Bilderkennung Bild 1
- 51: Bilderkennung Bild 2
- 52: Grauwerterfassung
- 53: Grauwertvergleich
- 54: Zähler
- 55: Schwelldetektion

## Patentansprüche

1. Verfahren zur Erkennung einer Verschleierung durch Beschlagbildung, Vereisung und/oder Verschmutzung des optischen Systems eines Fahrzeugs, **dadurch gekennzeichnet, dass** das optische System mindestens zwei optische Sensoren (8) zur Bilderfassung aufweist, und in dem erfahren folgende Schritte ausgeführt werden :
a-Bilderfassung des ersten Sensors (50)
b-Bilderfassung des zweiten Sensors (51)
c-Erkennen einer Verschleierung durch Messung der Grauwertverteilung in den erfassten Bildern der beiden Sensoren (52,53)
d-Einleiten einer Warnanzeige und/oder des Beheizens des optischen Systems, wenn eine Verschleierung erkannt wird.

2. Verfahren nach Anspruch 1 wobei die Erkennung der Verschleierung über einen zeitlichen Verlauf gesteuert wird.

3. Verfahren nach Anspruch 1 wobei die Erkennung der Verschleierung durch Helligkeitsvergleich der von unterschiedlichen Sensoren erfassten Bilder optimiert wird.

4. Optisches System für ein Fahrzeug, wobei das optische System die Erkennung einer Verschleierung durch Beschlagbildung, Vereisung und/oder Verschmutzung des optischen Systems erlaubt, **dadurch gekennzeichnet, dass** das optische System aus mindestens zwei optischen Sensoren (8) zur Bilderfassung, mit Prozessoren (17) zur Bilderkennung und Kommunikationskontrollern (18) besteht, wobei durch den ersten Sensor (50) und den zweiten Sensor (51) jeweils eine Bilderfassung durchführbar ist, wobei das Erkennen einer Verschleierung durch Messung der Grauwertverteilung in den erfassten Bildern der beiden Sensoren (52, 53) durchführbar ist, wobei mittels der Kommunikationskontroller (18) Informationen weiterer optischen Sensoren über das Fahrzeugnetz (19) empfangen werden können, und wobei das optische System eine Warnanzeige und/oder eine Heizung aufweist, die im Fall einer Verschleierung des optischen Systems aktivierbar sind.

5. Optische System nach Anspruch 4 wobei beim Erkennen einer Verschleierung eine Anzeige (20) als Information für den Fahrer aktiviert wird.

6. Optische System nach Anspruch 4 wobei beim Erkennen einer Verschleierung die Heizung (14) einer optischen Linse (12) des optischen Systems aktiviert wird.

7. Optisches System nach Anspruch 4 **dadurch gekennzeichnet, dass** die Prozessoren (17) einen Zähler enthalten, der hoch gezählt wird, wenn der Verlauf der zeitliche Veränderung der Verschleierung detektiert wird.

## Claims

1. A method for detecting an obscuration caused by the formation of condensation, icing or grime on the optical system of a vehicle **characterized**
**in that** the optical system comprises at least two sensors (8) for image capture and that in the method the following steps are being performed:
a) image capture by the first sensor (50)
b) image capture by the second sensor (51)
c) detection of an obscuration by measuring the grayscale distribution in the images captured by the two sensors (52, 53)
d) initiation of a warning annunciation and/or heating of the optical system when an obscuration is detected.

2. A method according to claim 1, wherein the detection of an obscuration is controlled by a time characteristic.

3. A method according to claim 1, wherein the detection of the obscuration is optimized by a brightness comparison of the images captured by different sensors.

4. An optical system for detecting an obscuration through the formation of condensation, icing and/or contamination of the optical system of a vehicule, wherein the optical system is comprised of at least two optical sensors (8) for image capture with processors (17) for image recognition and communication controllers (18), wherein an image capture can be performed respectively by the first sensor(50) and by the second sensor (51), and wherein the detection of an obscuration can be performed by measuring the grayscale distribution in the captured images of the two sensors (52, 53), and wherein information of additional optical sensors can be received through the vehicle network (19) by means of the communication controllers (18), and wherein the optical system comprises a warning indicator and/or a heatable optical system, which is activated when the optical system is obscured.

5. An optical system according to claim 4, wherein a display (20) is activated as driver information, when an obscuration is detected.

6. An optical system according to claim 4, wherein the heater (14) of an optical lens (12) of the optical system is activated when an obscuration is detected

7. An optical system according to claim 4, wherein the processors (17) include a counter, which is increased when the characteristic of the temporal change of the obscuration is detected.

## Revendications

1. Procédé de reconnaissance d'un voilage par formation de buée, givrage et/ou encrassement du système optique d'un véhicule,
**caractérisé en ce que** le système optique présente au moins deux capteurs optiques (8) pour la détection d'image et les étapes suivantes sont réalisées dans le procédé:
a-détection d'image du premier capteur (50)
b-détection d'image du deuxième capteur (51)
c-reconnaissance d'un voilage par mesure de la répartition de la valeur de gris dans les images détectées des deux capteurs (52, 53)
d-introduction d'un voyant et/ou du chauffage du système optique lorsqu'un voilage est reconnu.

2. Procédé selon la revendication 1, dans lequel la reconnaissance du voilage est commandée par le biais d'un déroulement dans le temps.

3. Procédé selon la revendication 1, dans lequel la reconnaissance du voilage est optimisée par comparaison de clarté des imagée détectées par différents capteurs.

4. Système optique pour un véhicule, dans lequel le système optique permet la reconnaissance d'un voilage par formation de buée, givrage et/ou encrassement du système optique, **caractérisé en ce que** le système optique se compose d'au moins deux capteurs optiques (8) pour la détection d'image, avec des processeurs (17) pour la reconnaissance d'image et des contrôleurs de communication (18), une détection d'image pouvant à chaque fois être réalisée par le premier capteur (50) et le second capteur (51),la reconnaissance d'un voilage pouvant être réalisée par mesure de la répartition de la valeur de gris dans les images détectées des deux capteurs (52, 53), des informations d'autres capteurs optiques prouvant être reçues par le biais du réseau du véhicule (19) au moyen des contrôleurs de communication (18), et le système optique présentant un voyant et/ou un chauffage qui peuvent être activés en cas de voilage du système optique.

5. Système optique selon la revendication 4, dans lequel un affichage (20) en tant qu'information pour le conducteur est activé en cas de reconnaissance d'un voilage.

6. Système optique selon la revendication 4, dans lequel le chauffage (14) d'une lentille optique (12) du système optique est activé en cas de reconnaissance d'un voilage.

7. Système optique selon la revendication 4, **caractérisé en ce que** les processeurs (17) contiennent un compteur qui est incrémenté lorsque le déroulement de la modification temporelle du voilage est détecté.
